# EUROPÄISCHE PATENTSCHRIFT

(11) **EP 0 932 816 B1**
(45) Veröffentlichungstag und Bekanntmachung des Hinweises auf die Patenterteilung: **18.06.2003**
(21) Anmeldenummer: 97913153.9
(22) Anmeldetag: 17.10.1997
(51) Int. Cl.: G01B 11/24

(54) **VERFAHREN UND VORRICHTUNG ZUM MESSEN DES VERLAUFS REFLEKTIERENDER OBERFLÄCHEN**
METHOD AND DEVICE FOR MEASURING THE COURSE OF REFLECTIVE SURFACES
PROCEDE ET DISPOSITIF POUR MESURER LE TRACE DE SURFACES REFLECHISSANTES

(30) Priorität: 18.10.1996 DE 19643018
(43) Veröffentlichungstag der Anmeldung: 04.08.1999
(73) Patentinhaber: ISRA Glass Vision GmbH, 45768 Marl (DE)
(72) Erfinder: PINGEL, Ulrich, D-45770 Marl (DE); DÜMMLER, Matthias, D-45657 Recklinghausen (DE); KLAPHECKE, Johannes, D-45894 Gelsenkirchen (DE)
(74) Vertreter: Sparing, Rolf Klaus
(86) Internationale Anmeldenummer: EP9705732
(87) Internationale Veröffentlichungsnummer: WO98017971

(56) Entgegenhaltungen:
- EP-A- 0 262 089
- DE-A- 2 439 988
- SENYA KIYASU ET AL: "MEASUREMENT OF THE 3-D SHAPE OF SPECULAR POLYHEDRONS USING AN M-ARRAY CODED LIGHT SOURCE" IEEE TRANSACTIONS ON INSTRUMENTATION AND MEASUREMENT, Bd. 44, Nr. 3, 1.Juni 1995, Seiten 775-778, XP000527562
- DORBAND B ET AL: "STREIFENPROJEKTION PRUFT IN ECHTZEIT MIT 5 PM AUFLOSUNG FRINGE PROJECTION FOR REAL TIME TESTING AT 5 PM RESOLUTION" WERKSTATT UND BETRIEB, Bd. 128, Nr. 3, 1.März 1995, Seiten 157-160, XP000508464
- WU J ET AL: "WELD BEAD PLACEMENT SYSTEM FOR MULTIPASS WELDING" IEE PROCEEDINGS: SCIENCE, MEASUREMENT AND TECHNOLOGY, Bd. 143, Nr. 2, 1.März 1996, Seiten 85-90, XP000581077
- PATENT ABSTRACTS OF JAPAN vol. 011, no. 058 (P-550), 21.Februar 1987 & JP 61 223605 A (FUJI PHOTO FILM CO LTD), 4.Oktober 1986,
- KOERNER K. ET AL.: 'Schnelle Planitätsmessung von grossflächigen Objekten' MSR MAGAZIN 11-12 1995, Seiten 16 - 18

## Beschreibung

Die Erfindung betrifft ein Verfahren nach dem Oberbegriff des Anspruchs 1. Die Erfindung betrifft ferner eine Vorrichtung nach dem Oberbegriff des Anspruchs 19.

Aus der Praxis sind mehrere tastende Verfahren zum Messen des Verlaufs von Oberflächen flacher oder gewölbter Gegenstände bekannt, bei denen beispielsweise pneumatisch ausfahrbare Tastglieder gegen den zu messenden Gegenstand in Anschlag fahren und ein dem Verfahrweg entsprechendes Signal einer Recheneinheit zuführen, die daraus den örtlichen Abstand ermittelt und, ausgehend von einer Vielzahl derartiger Messungen, eine Aussage über den Verlauf der Oberfläche des Gegenstandes trifft. Der Einsatz derartiger Meßverfahren und der zugehörigen Vorrichtungen ist aufwendig, da mit Rücksicht auf die Empfindlichkeit des zu messenden Gegenstands der Meßtaster nur langsam ausfahren kann, möglicherweise den Gegenstand oder dessen Oberfläche beschädigt (zum Beispiel zerkratzt, eindrückt) und darüber hinaus der Temperaturbereich, in dem derartige Techniken einsetzbar sind, stark eingeschränkt ist. Daher sind solche taktilen Meßverfahren den berührungslosen Meßverfahren meist unterlegen.

JP-A-61223605 zeigt eine Einrichtung bzw. ein Verfahren zum Inspizieren einer Oberflächenform, bei dem eine Streifen-Musterplatte durch eine Lichtquelle beleuchtet wird und die Oberfläche des reflektierenden Prüfgegenstands anstrahlt. In einem zum Einfallswinkel entsprechenden Ausfallwinkel ist eine Kamera aufgebaut, die das aufgenommene Bild an ein Bildverarbeitungssystem abgibt, wo es mit einem in einer Prozessoreinheit gespeichertem Muster einer flachen Oberfläche verglichen wird. Die Aufnahmen dienen zur Beurteilung der Ebenheit der beobachteten Oberfläche, und erlauben keine quantitative Messung der Oberfläche von Gegenständen.

DE-A-24 39 988 zeigt eine Einrichtung und ein Verfahren zum Erfassen von örtlich begrenzten Fehlern an gewölbten Flächen. Hierbei wird stark gebündeltes Licht, erzeugt durch einen Lichterzeuger, entlang eines Gitters aus horizontalen und vertikalen Linien verfahren, wobei ein Vielfaches der Liniendicke als Abstand zwischen den benachbarten Linien verbleibt. Das Licht wird auf den Prüfling projiziert und unter einem von dem Projektionswinkel verschiedenen Winkel mittels einer Fernsehkamera beobachtet. Die Kamera beobachtet einen Bildausschnitt des abgebildeten Musters, wobei die Winkel von Laser und Kamera verschieden gewählt sind. Eine örtliche Verformung des Karosserieteils wird bestimmt durch Abweichungen in dem Verlauf der beobachteten Linie.

Der Aufsatz von Kiyasu et al., "Measurement of the 3-D Shape of Specular Polyhedrons Using an M-Array Coded Light Source", in "IEEE Transactions on Instrumentation and Measurement" Bd. 44 Nr. 3 (Juni 1995), Seiten 775-778, zeigt einen Meßstand zur Vermessung vieleckiger dreidimensionaler Objekte, bei dem das Bild einer flächigen Beleuchtungseinrichtung auf einer reflektierenden Oberfläche nach einem für nicht reflektierende Oberflächen geeigneten Verfahren von einer CCD-Kamera aufgenommen wird. Die Auswertung des Bildes ermittelt für jeden Bildpunkt ausgehend von einem zu berechnenden Normalenvektor die Orientierung einer Vieleck-Facette.

Der Artikel von Körner, K. et al. "Schnelle Planitätsmessung von großflächigen Objekten", MSR-Magazin, 11-12/1995, Seite 16-18, beschreibt ein optisches Meßverfahren für die Planitätsmessung von Dünngläsem. Hierbei wird ausgehend von der Lichtquelle ein Liniengitter auf einer Dünnglasplatte scharf abgebildet, wobei die optische Achse einen großen Winkel (84i) zur Normalen der Dünnglasplatte einnimmt. Diese Abbildung wird unter einem gleichfalls großen Winkel von einer CCD-Zeilenkamera beobachtet, aus deren Beobachtung durch phasenauswertende Algorithmen eine Information über die Höhe bzw. über die Planität des Dünnglases berechnet wird. Zwischen Liniengitter und Dünnglasplatte ist in der optischen Einfallachse eine erste Abbildungsstufe vorgesehen, und der optischen Ausfallachse zwischen Dünnglasplatte und Zeilenkamera ist eine zweite Abblldungsstufe vorgesehen. Die erste Abbildungsstufe bildet das Linienmusters des Liniengitters auf die Vorderseite des Glases scharf ab, während die zweite Abbildungsstufe wiederum eine scharfe Abbildung des Bildes auf die Zeilenkamera bewirkt. Die bekannte Technik weist mehrere Unzulänglichkeiten auf: Einerseits ist die geometrische Anordnung der Komponenten aufwendig, da die optischen Achsen von den Abbildungsstufen aus sehr flach auf die Dünnglasplatte eintreffen. Das vom Liniengitter ausgehende Licht wird über die erste Abbildungsstufe auf die Glasplatte abgebildet; das Liniengitter selbst ist gegenüber der optischen Achse geneigt, so daß die Abstände der Linien unterschiedlich ausfallen. Bei geringen Änderungen in der Lage der Dünnglasplatte, die gerade gemessen wird und daher nicht als konstant vorausgesetzt werden kann, muß die ganze Einrichtung neu einjustiert werden. Zumindest aber unterliegen die berechneten Werte einer starken Fehlertoleranz. Da kleinste Abweichungen in der zu messenden Planität von einer idealplanen Oberfläche bereits eine starke Verzerrung des Bildes des Liniengitters hervorrufen, ist die Auflösung der Apparatur begrenzt. Weiterhin ist eine derartige Vorrichtung auch ausgesprochen platzraubend, so daß hohe Platzkosten entstehen, wenn eine solche Vorrichtung für die On-Line-Messung verwendet wird. Insbesondere beim Nachrüsten derartiger Vorrichtungen kann es zu Platzproblemen kommen. Schließlich ist noch zu bemerken, daß die Zeilenkamera sehr streulichtempfindlich ist, wodurch eine kostenaufwendige Abschirmung vorgesehen werden muß; dies liegt daran, daß das Bild auf die Kamera scharf abgebildet wird, wobei die Kamera unter einem Winkel zu der Glasoberfläche angeordnet ist, bei dem der Meßpunkt ansonsten außerhalb des Sichtfelds liegt, so daß die Kamera auch durch anderes Licht (und dessen Schwankungen) beeinflußbar ist. Für die Auswertung der Messungen müssen die Abbildungsbedingungen bekannt sein und berücksichtigt werden. Will man mit der bekannten Technik eine dreidimensionale Messung durchführen, ist dies nur derart möglich, daß die Glasplatte relativ zu dem Bildausschnitt, den die Kamera beobachtet, verschoben wird, und mehrere Messungen hintereinander stattfinden. Für die Messung an mehreren Orten der Oberfläche gleichzeitig ist die Technik nicht ausgelegt, da nur in einem Bereich eine scharfe Abbildung des Liniengitters erfolgt. Hierdurch dauern exakte Messungen größenordnungsmäßig eine bis mehrere Minuten. Für die Messung von Oberflächen mit größeren Radien kann das abgebildete Muster nicht mehr ausgewertet werden.

US-A-5 110 200 zeigt ein Verfahren und eine Vorrichtung zur Beobachtung bzw. zur Vermessung der menschlichen Hornhaut. Ein Videobild einer Reflexion eines beleuchteten Rings wird dabei auf Diskontinuitäten in der Helligkeit des Bilds für die Bestimmung der Kontur der Hornhaut untersucht. Dieses Verfahren ist aber für sich bewegende Gegenstände, wie durchlaufende Bänder, ungeeignet, da wenn zeitgleich eine Vielzahl von Veränderungen auftreten die Auswertung versagt. Femer ist das Verfahren für die Auswertung von Gegenständen, die Licht mehrfach reflektieren, wie dies der Fall für die beiden Oberflächen einer Glascheibe ist, ebenfalls nicht geeignet. Auch kann das bekannte Verfahren keine Abweichungen in der Planität einer Oberfläche ermitteln. Schließlich ist das bekannte Verfahren recht zeitintensiv, so daß es nicht für den industriellen Einsatz geeignet ist.

DE-A-44 01 541 zeigt ebenfalls ein Verfahren zur Bestimmung der Oberflächenstruktur der Hornhaut. Dabei erfaßt eine hinter einer Lochblende angeordnete Kamera das von einer Leuchtdiode, die auf Kreisbahnen mit veränderlichen Radien kreist, ausgesandte und von der Augennetzhaut reflektierte Licht. Durch Abweichungen des reflektierten Lichts von der Kreisform wird auf örtliche Fehler in der Netzhaut geschlossen. Durch die mit zeitlicher Unterbrechung erfolgende Beobachtung kann auch bei ineinander übergehenden oder unterbrochenen Reflexionen diese dem jeweiligen Ausgangsradius der Leuchtdiode zugeordnet werden. Das bekannte Verfahren ist zeitaufwendig und daher nicht im industriellen Maßstab anwendbar. Auch ist es nicht für doppelt reflektierende Materialien geeignet. Auch ist es nicht möglich, der Bewegung der Lichtquelle eine Bewegung eines zu vermessenden gegenstands zu überlagern.

Es ist die Aufgabe der Erfindung, ein Verfahren nach dem Oberbegriff des Anspruchs 1 bzw. eine Vorrichtung nach dem Oberbegriff des Anspruchs 19 anzugeben, die einfach aufgebaut und präzise beherrschbar sind.

Diese Aufgabe wird bei dem eingangs genannten Verfahren mit den kennzeichnenden Merkmalen des Anspruchs 1 gelöst. Diese Aufgabe wird bei der eingangs genannten Vorrichtung mit den kennzeichnenden Merkmalen des Anspruchs 19 gelöst.

Die erfindungsgemäße Technik erlaubt insbesondere das Messen des Verlaufs einer reflektierenden Oberfläche eines Gegenstands, der aus einem zumindest für Licht bestimmter Wellenlängen teilweise transparenten Material besteht, das dieses Licht an wenigstens einer weiteren hinter der Oberfläche angeordneten Fläche reflektiert. Solche Gegenstände sind zum Beispiel Glasplatten, Kunststoffolien, mit einem transparenten Überzug versehene reflektierende Oberflächen, laminierte Autoglasscheiben, usw. Vorzugsweise werden die einander überlagernden Reflexionen der wenigstens zwei Flächen separiert, so daß Messungen einer bisher nicht dagewesenen Päzision entstehen.

Es ist sowohl möglich, daß die Kamera das Spiegelbild direkt beobachtet, als auch, daß die Kamera das Spiegelbild indirekt über eine Spiegelanordnung beobachtet.

Zweckmäßigerweise schließen in dem ersten Fall die optischen Achsen (Ebenen) dann zwischen Muster und Spiegelbild einerseits und zwischen Spiegelbild und Kamera andererseits einen Winkel ein, der kleiner als 90° ist, vorzugsweise (sehr) viel kleiner. Die beiden optischen Achsen sind vorzugsweise so angeordnet, daß sie wie Einfall- und Ausfallwinkel reflektierten Lichts zur Normalen einer planen Oberfläche den gleichen Winkel beiderseits der Normalen einnehmen, in der Summe also den eingeschlossenen Winkel ergeben. Es ist möglich und bevorzugt, wenn dieser eingeschlossene Winkel sehr klein ist. Der Öffnungswinkel zwischen Muster und Kamera ist der Winkel (an der planen Oberfläche) zwischen denjenigen Ebenen, in denen die Zeilenkamera und der beobachtete Spiegelbildausschnitt einerseits bzw. das Lichtmuster und der beobachtete Ausschnitt andererseits angeordnet sind. Bei einer Matrixkamera liegen die entsprechenden Winkel für jede Zeile vorzugsweise dicht beeinander.

In dem zweiten Fall, in dem eine Spiegelanordnung vorgesehen wird, umfaßt letztere vorzugsweise einen Parabolspiegel, der das beobachtete Spiegelbild unabhängig von der Entfernung zwischen reflektierender Oberfläche und Parabolspiegel stets scharf in einem Punkt abbildet, in dem dann die Kamera angeordnet wird.

Ein leicht zu realisierendes Muster weist äquidistante, abwechselnd helle und dunkle Lichtstreifen auf; aber auch andere geometrisch definierte alternierende Hell-Dunkel-Sequenzen sind als Muster geeignet, z.B. solche mit Streifen, die mehr als zwei verschiedenen Lichtintensitäten aufweisen, Schachbrettmuster, karierte Muster. Besonders vorteilhaft ist ein Muster, das aus dunklen (hellen) einander unter einem rechten Winkel kreuzenden Streifen besteht, die helle (dunkle) Quadrate einschließen, deren Kantenlänge der Breite der Streifen entspricht.

Erfindungsgemäß wird das Muster unmittelbar in der reflektierenden Oberfläche gespiegelt. Planitätsfehler (also kleine Steigungen) in der gemessenen 2- oder 3-dimensionalen reflektierenden Oberfläche verursachen Verzerrungen in dem Spiegelbild, wobei eine leichte Erhöhung bzw. Absenkung in der Oberfläche ein breiteres bzw. ein schmaleres Spiegelbild induziert, indem das eintreffende Licht etwas stärker gebündelt oder gestreut wird. Mittels der Kamera ist es möglich, für jeden Bildpunkt des Spiegelbilds die Intensitätsänderung (bzw. den Verlauf) im Hell-Dunkel-Spiegelbild genau zu erfassen und somit bereits kleinste Änderungen im Helligkeitsgrad auszuwerten, und beispielsweise über eine Differenzbildung mit einem idealen Spiegelbild Rückschlüsse auf Schwankungen in der zu messenden Oberfläche zu ziehen. Ausgehend von Grenzänderungen in den von der Kamera beobachteten Abmessungen der Hell-Dunkel-Abstände werden die örtlichen Neigungsunterschiede errechnet. Durch den einfachen Aufbau der erfindungsgemäßen Vorrichtung bzw. durch das kompakte und direkte erfindungsgemäße Verfahren läßt sich der Oberflächenverlauf extrem schnell und zuverlässig erfassen. Das Licht tritt von dem Muster ausgehend parallel auf die zu messende Oberfläche. Die Hell-Dunkel-Sequenz des Musters spiegelt sich in der Oberfläche. Bei unterstellter vollkommen planer Oberfläche würde sich demnach - wenn der seitliche Versatz zur Normalen nicht zu groß ist - ein zum Hell-Dunkel-Muster exakt proportionales Spiegelbild ergeben. Da dessen Aufbau (Abstände etc.) bekannt ist, ermöglicht die erfindungsgemäße Anordnung es vorteilhafterweise, die Berechnung der Abweichungen von einem Idealbild nicht im Vergleich zu einem aufgenommenen Bild einer Normaloberfläche durchzuführen, sondern im Verhältnis zu den bekannten Abmessungen des Linienrasters, wodurch die Genauigkeit der Auswertung verbessert ist. Das Maß der Verzerrung eines Streifens des beobachteten Spiegelbilds wird gemessen, und hieraus seine Neigung zu einer planen Fläche ermittelt, wobei die Neigung als Winkel ausdrückbar ist. Für jeden Streifen des Musters läßt sich so im Spiegelbild die Neigung des korrespondierenden Flächenstücks ermitteln; reiht man diese Stücke aneinander (Integration), ausgehend von einem (z.B. durch Anschlag) definierten Punkt auf der Oberfläche, erhält man zusätzlich eine Information über den sukzessive infolge der Neigungen eingetretenen Höhenanstieg, kann also dem Verlauf "folgen".

Ein sehr interessanter Sonderfall der Messung des Verlaufs einer Oberfläche ist die Messung einer planen Oberfläche zur Ermittlung ihrer Planität. In einer Vielzahl von verarbeitenden Betrieben wird diese Information benötigt. Das erfindungsgemäße Verfahren bzw. die erfindungsgemäße Vorrichtung sind auch hierfür geeignet. Grundsätzlich läßt sich dieselbe Auswertung einsetzen; vorzugsweise wird jedoch eine Grenzwertbetrachtung vorgenommen, bei der die Änderung der Neigungswinkel über der Strecke bestimmt wird. Dann kann auch eine schräge Oberfläche auf die Genauigkeit ihrer Flächenbearbeitung untersucht werden, ohne daß die Schräge als solche als unerwünschte Neigung ausgewertet wird. Auch der durchschnittliche Schrägungswinkel ließe sich daraus ableiten. Die vorstehend beschriebene Auswertung kann bezüglich der Untersuchung der Glattheit aller "stetigen" Oberflächen eingesetzt werden, z.B. auch zur Untersuchung der Kugeligkeit einer Sphäre. Minima, Maxima und Wendepunkte in den Differentiationen zeigen mit hoher Empfindlichkeit Stellen mit "unglatten" bzw. nicht planen Verläufen an.

Das Muster kann sowohl preiswert durch das Hintereinanderanordnen einer Lichtquelle und eines physischen Rasters realisiert werden, als auch mittels einer Matrix aus einer Vielzahl von LEDs.

Gemäß einer ersten bevorzugten Variante handelt es sich bei dem Lichtmuster, das eingesetzt wird, um eine Struktur von wenigstens zwei regelmäßig alternierend angeordneten unterschiedlichen Lichtintensitäten. Um einen optimalen Kontrast zu erhalten, wird gemäß einer ersten bevorzugten Weiterbildung ein Liniengitter aus äquidistanten Linien, die altemierend opak (Lichtdurchlässigkeit ca. 0%) und transparent (Lichtdurchlässigkeit ca. 100%) sind, so verwendet, daß das von einer Lichtquelle ausgehend durch die transparente Linie parallel auf die reflektierende Oberfläche durchtretende Licht mit dem durch die opake Linie am Durchtritt durch das Lichtraster gehinderten Licht eine eine Sequenz von einander abwechselnden hellen und dunklen Linien bzw. Streifen erzeugt, die sich in der Oberfläche spiegeln. Es versteht sich, daß die Lichtdurchlässigkeit auf Licht einer bestimmten Wellenlänge oder eines Wellenlängenbereichs beschränkt sein kann. Es ist aber auch gemäß einer alternativen vorteilhaften Variante möglich, das Lichtraster derart auszubilden, daß es in Sequenzen mehr als zwei unterschiedliche Lichtdurchtässigkeiten aufweist, beispielsweise 0%-50%-100% oder 1%-10%-100%.

In Abhängigkeit von dem Abstand der Kamera, die vorzugsweise eine Zeilen- oder Matrixkamera ist, zu dem Bild ergibt sich für jeden Bildpunkt (Pixel) in der Kamera ein Meßwert, der entweder durch eine beobachtete dunkle Linie oder eine beobachtete helle Linie des Spiegelbilds oder im Übergangsbereich zwischen zwei Linien durch einen Grauwert ausgedrückt wird. Vergleicht man diese gemessenen Werte mit den Werten einer idealen Abbildung (und unterstellt man einen parallelen Verlauf des Lichtes, was in erster Näherung ohne Genauigkeitsverlust zulässig ist, wodurch der Vergleich unmittelbar mit der Lichtmuster selbst erfolgen kann), so erhält man ohne weiteres örtlich definierbare Abweichungen von einem maßstabsgetreuen Lichtmuster. Aufgrund dieser Abweichungen werden schon kleinste von einer planen Oberfläche abweichende Neigungen exakt berechenbar, und in einer Auswerteeinheit, beispielsweise mit Hilfe einer Softwareroutine bestimmt. Dabei erfolgt vorteilhafterweise eine Auswertung der relativen Lage der beobachteten Hell-Dunkel-Sequenz, so daß eine eventuelle Schräge in der Anordnung der ansonsten selbst planen Oberfläche die Messung nicht beeinträchtigt.

Gemäß einer zweiten bevorzugten Variante handelt es sich bei dem Lichtraster um ein Kreuzraster, das im wesentlichen wie ein Linienraster aussieht, bei dem beispielsweise die opaken Linien ebenfalls senkrecht zu der ersten Linienrichtung verlaufen. Es entsteht also ein Kreuzraster, das zu einem Viertel lichtdurchlässig und zu Dreiviertel lichtundurchlässig ist. Alternativ ist es jedoch möglich, in dem Lichtraster die von lichtundurchlässigen Rechtecken umgebene lichtdurchlässige Fläche derart zu vergrößern, daß das Verhältnis hell/dunkel etwa gleich ist. Auch hier ist es femer möglich, mehr als zwei Lichtdurchlässigkeiten vorzusehen. Zur Beobachtung des Spiegelbildes wird hierbei eine Flächenkamera eingesetzt, also eine Matrixkamera, die einen rechteckigen, zweidimensionalen Ausschnitt der Oberfläche beobachtet, und damit eine 3D-Messung ermöglicht (die aus den gemessenen Werten errechnete Abweichung in der Planität (Neigung, Welligkeit, Höhe) der Oberfläche entspricht einer ersten Dimension; dieser Wert wird über die Koordinaten in Längs- und Querrichtung gemessen, so daß die Oberfläche als dreidimensionales Bild darstellbar ist; eine Messung mit der Zeilenkamera wäre eine 2D-Messung: Verlauf über Länge, was z.B. bei gewissen Fahrzeugkarosserieblechen sinnvoll ist).

Gemäß einer dritten Variante ist es möglich, das Lichtraster als Schachbrettstruktur auszubilden, bei der abwechselnd Quadrate opak und lichtdurchlässig ausgebildet sind.

Gemäß einer vierten Variante werden die in den vorhergehenden Varianten erzielten Sequenzen von Lichintensitäten durch eine Matrix aus LEDs erzeugt, die ähnlich einer Stadionanzeige in einer Sportarena ausgebildet sein kann.

Den vorstehend beschriebenen Verfahren ist gemein, daß sie das beobachtete Spiegelbild gegen die bekannte Abmessung des Rasters vergleichen, und aus beobachteten Abweichungen auf den Winkel schließen, um den die Oberfläche beispielsweise gegenüber einen planen Fläche geneigt ist.

Eine hochpräzise Messung der Planität bzw. der Glattheit und der Welligkeit der Oberfläche einer reflektierenden Oberfläche, deren Genauigkeit und Auflösung noch einmal einen Faktor 10 bis 50 verbessert ist, läßt sich durch eine vorteilhafte Ausführung erreichen: Das Spiegelbild des Rasters wird ebenfalls durch eine Zeilen- oder Matrixkamera beobachtet, allerdings derart, daß jeweils für jede Dimension eine Hell-Dunkel-Sequenz des Musters, vorzugsweise ein äquidistantes Hell-Dunkel-Paar, das z.B. durch ein opakes und transparentes Lichtraster wie das oben erwähnte Kreuzraster erzeugt wird, auf eine Anzahl von Pixeln der Kamera abgebildet wird, die ein ganzzahliges Vielfaches der Sequenz beträgt. Hierdurch entstehen an dem "Gitter" der Kamera Moire-Schwebungen, die mit Hilfe von phasenauswertenden Verfahren extrem genaue Aussagen über Abweichungen in der Planität erlauben. Bei der Auswertung wird das erfaßte Moiré-Bild in eine für das Moiré-Bild typische Sinuskurve (bzw. eine andere zyklische Kurve) umgerechnet, und aus den Phasenverschiebungen einerseits und den Stauchungen und Dehnungen der errechneten Sinuskurve andererseits auf Planitätsfehler, Welligkeit und dergl. rückgeschlossen.

Besonders bevorzugt ist das Verhältnis ein Hell/Dunkel-Paar zu drei, alternativ auch zu vier oder fünf, Pixeln. Aufgrund der hohen Kosten für Matrixkameras ist es zweckmäßig, die Anzahl der Pixel je Hell/Dunkel-Sequenz zu minimieren.

Im Falle beispielsweise eines Rasters mit Schachbrettmuster aus hellen und dunklen Quadraten und einer Matrixkamera bedeutet dies, daß auf vier Quadrate neun Pixel kommen. Die Pixel sind derart auf das Bild gerichtet, daß im Idealfall ein Pixel eine vollständige helle und ein anderes Pixel eine vollständige dunkle Stelle beobachtet, während das dazwischenliegende Pixel einen Grauton erfaßt. Treten nun Änderungen in der Oberflächenpianität auf, wird das Bild in Abhängigkeit von der Schwankung verschoben und die Hell/Dunkel-Werte, die von den Pixels erfaßt werden, um einen bestimmten Betrag in die eine oder die andere Richtung verschoben. Dieser Betrag läßt sich besonders leicht aus den Intensitäten, die die Pixel messen, ermitteln und über einfache Auswerteverfahren auf eine Winkelverschiebung zurückführen, die einen Ausdruck für die Planität ist. Infolge von Moiré-Bilderscheinungen, die infolge der Superposition des Lichtrasters und des "Gitters" der Zeilenkamera entstehen, können Informationen über die Planität mit wesentlich höherer Auflösung ermittelt werden.

Es ist auch möglich, das Spiegelbild einer Hell/Dunkel-Sequenz auf genau zwei Pixel abzubilden, wodurch die Kamera, insbesondere eine Matrixkamera, sehr viel billiger wird. Dann ist jedoch das Lichtraster derart auszubilden, daß Sequenzen von Linien erzeugt werden, die sich in wenigsten drei unterschiedlichen Lichtintensitäten wiederholen. Auch aus diesem Verhältnis läßt sich eine Sinuskurve ermitteln, deren Phasenverschiebung in der sich bildenden Moiré-Schwebung zur Ermittlung von Planitätsfehlem verwendbar ist.

Schließlich ist es auch möglich, das Spiegelbilds einer Hell-Dunkel-Sequenz, insbesondere auch eines Paars, auf ein Pixel oder ein Vielfaches davon abzubilden; jedoch benötigt man dann drei Aufnahmen, bei denen jeweils das Muster um ein Drittel einer Hell-Dunkel-Sequenz verschoben ist. Diese Verschiebung läßt sich einfach mit der bereits geschilderten Matrix aus LEDs realisieren.

Bei wenigstens teilweise transparenten Werkstoffen können ausgehend von einer separaten Messung des an der Unterseite und der Oberseite von Glas reflektierten Lichtstrahls ferner neben Analysen von Höhe und Welligkeit auch Rückschlüsse auf die optischen Brechungsindizes des Werkstoffs erfolgen, die ansonsten nur mit Transmissionsverfahren möglich sind. So ist es gemäß einem besonderen Vorzug der Erfindung möglich, aus einer aus einer Mehrzahl von einander überlagernden Reflexion, diejenige Reflexion zu isolieren, die von der Rückseite des Materials stammt, und bei der das Beleuchtungsmuster (bzw. die beleuteten Teile des Musters) durch das Material hindurchgetreten sind. Diese Reflexion an der "Rückseite" fällt (z.B: wegen eines Verlustes an nicht reflektiertem Licht) schwächer aus, so daß sie leicht isoliert werden kann. Die Reflexion an der Rückseite liefert aber darüberhinaus nach Differentiation eine Aussage über die Reflexionsoptik des Materials.

Die Messung mit den erfindungsgemäßen Verfahren bzw. Vorrichtungen ist sehr schnell und dauert nur größenordnungsmäßig einige Millisekunden. Es ist daher vorteilhaft möglich, auch Material "im Fluß", beispielsweise am Ausgang einer Walzglasanlage oder Endloswalzen aus reflektierendem Stahl, zu beobachten und zu messen. Bei Verwendung eines Kreuzrasters mit einer Matrixkamera ist dabei zu beachten, daß im Gegensatz zur Zeilenkamera, die die Pixel parallel ausliest, Matrixkameras in der Regel seriell ausgelesen werden. Da der Zeitabstand zwischen zwei Auslesevorgängen möglicherweise bei hohen Fördergeschwindigkeiten der zu messenden Oberfläche zu groß ist, ist es möglich, die Beleuchtung durch das Lichtraster mittels Stroboskop oder Blitz zu verkürzen. Wenn dagegen die Oberfläche still steht, kann vorzugsweise mit einer Zeilenkamera über die gesamte Oberfläche abgetastet werden, und hieraus eine quasi dreidimensionale Darstellung ermittelt werden.

Vorzugsweise wird beim Auswerteschritt berücksichtigt, daß der Abstand der Zeilenkamera zu der zu messenden Oberfläche über die Zeile der Kamera nicht ganz gleichmäßig ist, da die Zeilenkamera eine kürzere Erstreckung hat als die Erstreckung des beobachteten Spiegelbildes. Demgemäß weist die Kamera in Richtung des Spiegelbildes einen Aperturwinkel auf, der im allgemeinen sehr klein ist, aber zu einer gewissen Meßungeauigkeit (infolge Unschärfe und infolge des größeren Abstands) führt, auf, die bei der Auswertung des Bildes berücksichtigt werden und im wesentlichen bereits durch das Abbildungsverhältnis auf die Kamera ausgeglichen wird. Vorstehend gesagtes gilt ebenfalls für beide Dimensionen, wenn eine Matrixkamera eingesetzt wird.

Gemäß einer besonders bevorzugten Weiterbildung der Erfindung ist es möglich, auch durchsichtige Spiegelmaterialien zu messen, beispielsweise Bildröhren, Displays, Planglas, Spiegel, gebogenes Glas oder vorgespanntes oder Verbundsicherheitsglas. Solche Materialien haben die Eigenschaft, daß sie einfallendes Licht sowohl an ihrer Oberseite als auch an ihrer Unterseite reflektieren und damit ein Doppelbild abgeben. Das Bild der Oberseite, dessen Intensität i.d.R. etwas stärker ist als das Bild der Unterseite, überlagert sich mit dem Bild der Unterseite. Während im Stand der Technik versucht wird. durch möglichst flach einfallende Winkel das Bild der Unterseite zu eliminieren, sind vorzugsweise Mittel vorgesehen, die eine Berücksichtigung des Bildes der Unterseite bei der Auswertung ermöglichen.

Gemäß einer ersten Variante dieser Mittel wird dies derart realisiert, daß die Abbildung des Bildes auf die Kamera unscharf erfolgt, so daß beide reflektierten Bilder mit ihrer resultierenden Intensität zum Tragen kommen und die Kamera ein Signal erfaßt, das jeweils von beiden Spiegelbildern stammt. Dabei ist zu berücksichtigen, daß in Abhängigkeit von der Dicke des Glases der Weg der Lichtpfade unterschiedlich lang ist und demzufolge ein entsprechender Versatz auftritt, der sich dahingehend äußert, daß zwischen einem hellen Bereich (sich überlagemde Reflexion des transparenten Streifens) und einem dunklen Bereich (sich überlagernde Reflexionen des opaken Bereichs des Rasters) "trübe" Bereiche gegeben sind, bei denen sich die "Reflexion" eines dunklen Bereichs (genauer gesagt erfolgt keine Reflexion von Dunkelheit, sondern der entsprechende dunkle Streifen ist von zwei reflektierten hellen Streifen begrenzt) der einen Seite des Glases mit der Reflexion des hellen Bereichs der anderen Seite des Glases überlagert (und umgekehrt). Der Abstand dieser Bereiche hängt von dem Winkel ab, unter dem sie beobachtet werden; dieser Winkel ist bekannt und muß bei der Auswertung berücksichtigt werden. Dabei wird bei Reflexion eines hellen Rasterbereichs auf der Oberseite die Intensität des erfaßten Bildes etwas größer sein als im umgekehrten Falle.

Alternativ hierzu und vorzugsweise ist es möglich, zwei hintereinander angeordnete Zeilen- oder Matrixkameras vorzusehen, die vorzugsweise denselben Bildausschnitt beobachten, wobei jeweils eine Kamera auf das von jeweils einer Seite des transparenten Materials reflektierte Spiegelbild (Fokus auf Raster) scharf eingestellt ist. Die Einzelauswertung kann dann in Kenntnis der Dicke des Gegenstands vorgenommen werden.

Durch das Vorsehen zweier Kameras, vorzugsweise in verschiedener Höhe und/oder unter verschiedenem Winkel zu der Oberfläche, kann ferner - sowohl bei transparenten als auch bei opaken Oberflächen - diskriminiert werden, ob eine Änderung der Anzahl der beobachteten Hell-Dunkel-Sequenzen in einem Bildausschnitt auf die Krümmung der Oberfläche (Linseneffekt) zurückzuführen ist, oder auf eine Änderung der Höhenlage, in der die reflektierende Oberfläche angeordnet ist (wodurch der Proportionalitätsfaktor zwischen definiertem Muster und Spiegelbild beeinflußt wird).

Grundsätzlich ist es bevorzugt, die Reflexionssignale an doppelt reflektierenden Materialien wie Glas zu trennen. Denn neben der genaueren Einzelinformation, die eine Aussage über die "vordere" Oberfläche ermöglicht, auch z.B. durch einen Integrationsschritt eine Aussage über die Form, gewinnt man durch Differentiation der Meßwerte, die von der "hinteren" Oberfläche reflektiert wurden, durch einen Differentiationsschritt eine Aussage über die Reflexionsoptik am Orte des jeweils vermessenen Materials.

Eine besonders zweckmäßige Art der Beobachtung desselben Ausschnitts ist möglich, wenn ein halbdurchlässiger Spiegel vorgesehen wird, der die Beobachtung desselben Ausschnitts mit unterschiedlichen Kameras aus verschiedenen Entfernungen ermöglicht. Wird beispielsweise in einem Bildausschnitt eine Erhöhung der Anzahl der hellen und dunklen Streifen beobachtet, so würde das unter der Annahme einer festliegenden Höhenlage der Oberfläche auf eine Krümmung in der Oberfläche nach Art einer Sammellinse deuten. Unter der Annahme einer vollkommen planen Oberfläche, die jedoch in ihrem Abstand zu Muster und Kamera einer Schwankung unterliegt, würde die Erhöhung der Anzahl der in einem Ausschnitt beobachteten Streifen auf eine Zunahme des Abstandes zu Muster bzw. Kamera aufgrund der damit einhergehenden verlängerten Strahlenwege hindeuten. Entsprechendes gilt bei festgestellter Herabsetzung der beobachteten Anzahl. In der Praxis, insbesondere wenn der Gegenstand mit der zu messenden Oberfläche während dessen Bewegung vermessen wird, überlagern sich beide Einflußfaktoren, es ist aber für die Berechnung des Verlaufs besonders vorteilhaft, wenn Fehler aufgrund von Schwankungen in der Höhenlage eliminierbar sind. Hierbei ist zu bemerken, daß die Kameras zur Beobachtung desselben Bildausschnitts aus unterschiedlichem Abstand eine entsprechend unterschiedlichen Apertur aufweisen. Das bedeutet aber, daß bei einer Abweichung der Höhenlage der Oberfläche die Anzahl der von jeder der beiden Kameras beobachteten Streifen proportional zum Verhältnis Abweichung/Abstand variiert.

Dann kann vorzugsweise die Auswertung des von den beiden Kameras beobachteten Bildausschnitts so erfolgen, daß die Abweichung untereinander in der Anzahl der absolut beobachteten Streifen in einem ersten Schritt zur Ermittlung der tatsächlichen Höhenlage verwendet wird, und die Anzahl der von wenigstens einer der Kameras beobachteten Steifen in einem weiteren Schritt bezogen auf die erwartete Anzahl bei der ermittelten Höhenlage unter Berücksichtigung des entsprechenden Proportionalitätsfaktors zur Ermittlung einer Krümmung herangezogen wird.

Die erfindungsgemäße Auswertung der Oberfläche eines wenigstens teilweise reflektierenden Gegenstandes mittels einer Matrixkamera ist zwar von der Auswertung her günstig, jedoch sind Matrixkameras ab gewissen Größenordnungen recht teuer in der Anschaffung. Werden im wesentlichen plane Materialien vermessen, betrifft die Messung also in erster Linie die Untersuchung der Planität, läßt sich nahezu dieselbe Aussagenschärfe wie mit einer Matrixkamera durch eine besonders bevorzugte Weiterbildung der Erfindung erreichen, für die nur zwei Zeilenkameras benötigt werden. Hierbei wird die Reflexion zweier Lichtraster jeweils im selben Ort der Oberfläche von je einer Kamera beobachtet. Die Hell-Dunkel-Sequenzen der Lichtraster sind aber schräg, vorzugsweise 45° zur Transportrichtung des Materials angeordnet, und in einem zu 90° komplementären Winkel, also vorzugsweise wiederum 45°, schräg zu ihrer Längsachse. Ferner sind die Schrägen der beiden Lichtraster genau entgegengesetzt, kreuzen sich also vorzugsweise um ca. 90°, sind somit schräg zur Spiegelachse mit der Kamera. Wenn in der Oberfläche eine (idealtypische) Änderung der Reflexion dergestalt eintritt, daß die Reflexion in eine Richtung der Oberfläche quer zur Längserstreckung der Raster abgelenkt wird, so wandert (gemäß dem trigonometischen Verhältnis) das von der einen Kamera erfaßte Bild in eine zur Ablenkungsrichtung normale Richtung um einen proportionalen Faktor aus, während die andere Kamera ein Auswandern in die dazu entgegengesetzte zur Ablenkungsrichtung normale Richtung erfaßt. Im anderen (idealtypischen) Fall, bei dem eine Stauchung bzw. eine Dehnung in der Reflexion in Längsrichtung des Rasters detektiert wird, kann der dieser Änderung zugrundeliegende Linseneffekt wie bisher phasenauswertend ermittelt werden. Da beide Kameras denselben Ausschnitt des Materials beobachten, lassen sich die beiden (idealen) Abweichungstypen ohne weiteres diskriminieren und auf den entsprechenden Ort der Reflexion zurückführen, so daß eine "Verkartung" der Oberfläche möglich ist. Es versteht sich, daß im Falle eines kontinuierlichen Abtastens mit einer derart ausgestalteten Vorrichtung die Oberfläche auch unbewegt bleiben kann. Diese erfindungsgemäße Variante eignet sich besonders für Messungen an Gegenständen, die insbesondere endlos unter der Meßvorrichtung verlagert werden.

Weiterhin kommen Auswertungen in Betracht, bei denen die Intensitäten bei verschiedenen Wellenlängen berücksichtigt werden, insbesondere mittels einer Farbkamera für die Rot-, Blau und Grünintensitäten bzw. bei getönten Glas, das Licht unterschiedlicher Farbe oder Wellenlänge unterschiedlich stark absorbiert.

Es ist zu bemerken, daß die Erfindung und ihre Weiterbildungen sowohl für die Messung von planen reflektierenden Oberflächen wie Flachglas geeignet ist als auch für reflektierende Oberflächen, z.B. polierte Oberflächen, die eine mehrdimensionale Sphäre aufweisen, beispielsweise Fahrzeugglasscheiben, Stanzteile, Bildröhren, mit einer reflektierenden Schicht überzogene Gegenstände und dergleichen, wobei die Gegenstände neben Walz-, Zieh- und Floatglas auch aus Acrylglas oder PVC bestehen können.

Weitere vorteilhafte Weiterbildungen der Erfindung ergeben sich aus der nachfolgenden Beschreibung und aus den Unteransprüchen.

Die Erfindung wird nachstehend anhand eines in den beigefügten Abbildungen dargestellten Ausführungsbeispiels näher erläutert.
Fig. 1 ist eine schematische Darstellung eines Ausführungsbeispiels der Erfindung.
Fig. 2 zeigt eine schematische Frontansicht einer erfindungsgemäßen Vorrichtung.
Fig. 3 zeigt eine schematische Seitenansicht der Vorrichtung aus Fig. 2.
Fig. 4 ist eine schematische Darstellung eines Ausschnitts eines von der Kamera erfaßten Signals, das anschließend weiterverarbeitet wird.
Fig. 5 zeigt schematisch in Draufsicht ein weiteres Ausführungsbeispiel einer erfindungsgemäßen Vorrichtung.
Fig. 6 zeigt schematisch in Seitenansicht die Vorrichtung aus Fig. 5.
Fig. 7 zeigt schematisch in perspektivischer Sicht die Vorrichtung der Fig. 5 und 6.

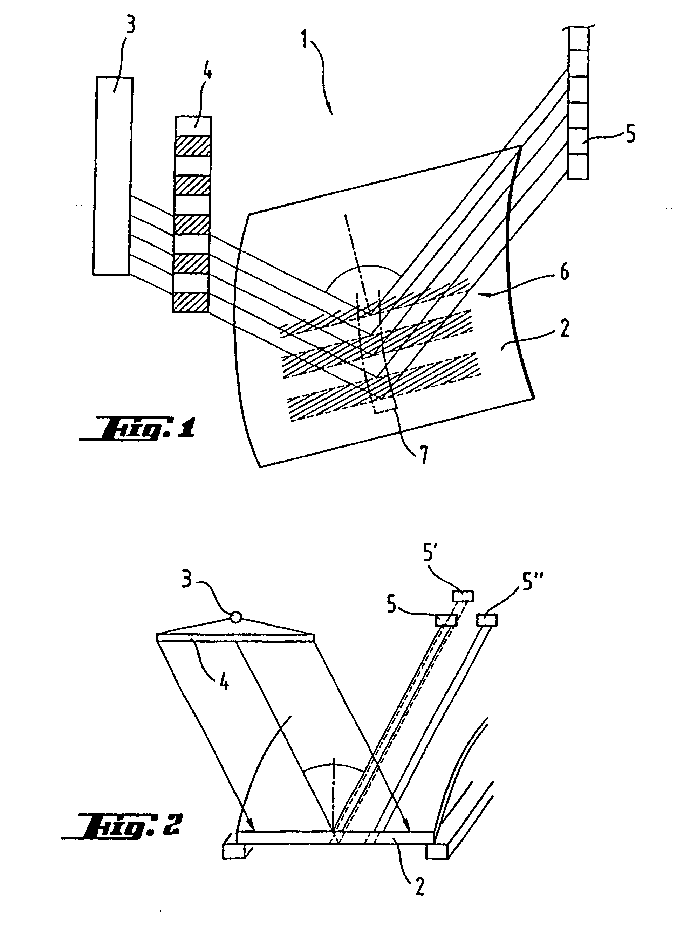

Bezugnehmend auf die Fig. 1 bis 4ist mit 1 ist eine Anordnung zum Messen des Verlaufs von reflektierenden Oberflächen bezeichnet. Die zu messende reflektierende Oberfläche 2 ist eine 2,5 mm dicke gebogene Walzglasscheibe, die einen rechteckigen Grundriß und eine Biegung in Längsrichtung aufweist. Auf die Walzglasscheibe 2 wird durch eine Lichtquelle 3, die sich in einer Ebene oberhalb der Walzglasscheibe 2 erstreckt, Licht projiziert, das durch ein Lichtraster 4 hindurchtritt. Das Lichtraster 4 besteht aus äquidistanten, 5mm breiten Streifen oder Linien, die abwechseln opak und transparent ausgebildet sind. Damit ist das durch das Lichtraster 4 durchtretende parallele Licht in (hellen) .Streifen angeordnet, die durch jeweils nichtbeleuchtete (dunkle, Lichtintensität gleich Null) Streifen getrennt werden. Es ist anzumerken, daß, da das Licht parallel aus dem Raster 4 austritt, sich die Breite des Rasters 4 im wesentlichen über eine Breite entsprechend der Breite der Scheibe 2 erstreckt, um die Scheibe 2 nahezu vollständig mit beleuchteten und unbeleuchteten Streifen zu überziehen. Die Länge des Rasters 4, also diejenige Erstreckung, die sich quer zu den Streifen und parallel zu der kurzen Kanten der Streifen erstreckt, beträgt ca. 2m, so daß insgesamt 400 Streifen (200 Hell/Dunkel-Paare) nebeneinander angeordnet sind.

Derselben Fläche der Scheibe 2 zugewandt ist eine Zeilenkamera 5, die einen Ausschnitt des Spiegelbildes 6, welches von dem Raster 4 in der Oberfläche des Glasstücks 2 entsteht, erfaßt. Der Ausschnitt beträgt ca. 80cm. Der beobachtete Spiegelbildausschnitt, der in Fig. 1 mit dem gestrichelten Bereich 7 angedeutet ist, befindet sich im wesentlichen mittig auf der Oberfläche der Scheibe 2 und verläuft im wesentlichen senkrecht zu der Erstreckung der Hell/Dunkel-Streifen in dem Spiegelbild 6. Es ist festzuhalten, daß äquidistante Streifen die Auswertung vereinfachen, aber keineswegs zwingend sind. Die Zeilenkamera 5 erfaßt mit jedem ihrer Pixel mit hoher Genauigkeit die Lage und Intensität des beobachteten Spiegelbildes 6. Hierzu wird der Fokus der Kamera 5 auf das Raster 4 eingestellt.

Es ist jedoch möglich, das Spiegelbild 6 in der Oberfläche 2 des Glases statt wie vorstehend beschrieben direkt auf indirekte Weise, z.B. über Spiegel zu beobachten. Vorzugsweise umfaßt eine Spiegelanordnung für die indirekte Beobachtung hierfür einen Parabolspiegel. Der Parabolspiegel wird derart angeordnet, daß einen Ausschnitt des Spiegelbilds 6 auf die Kamera zurückwirft. Einerseits ist das von dem parabolspiegel reflektierte Bild Stets scharf auf die Kamera eingestellt; andererseits ist diese Einstellung unabhängig von dem Abstand des Parabolspiegels zu dem Glas 2, so daß der Aufwand der Scharfeinstellung der Kamera vorteilhaft herabgesetzt ist.

Ausgehend von einer vollständig planen Oberfläche würde ein zu dem entsprechenden Raster 4 proportionales oder identisches Spiegelbild 6 von der Kamera 5 erfaßt werden. Liegen jedoch Planitätsunterschiede auf der Oberfläche des Glases 2 vor, kommt es zu einer Verzerrung des Spiegelbildes 6, das heißt die Abstände der Streifen zueinander, die von der Kamera 5 erfaßt werden, sind nicht mehr äquidistant. Abweichungen gegenüber einer vollständig planen Oberfläche treten als Winkelunterschiede in der Oberfläche 2 auf, es liegt sozusagen ein Profil von Bergen und Tälem vor, deren Steigung von Null (vollständig plane Oberfläche) verschieden ist. Das Spiegelbild 6 einer gemessenen Oberfläche 2 wird jeweils proportional zu diesen Steigungen abgelenkt. Diese Abweichungen, um die das reflektierte Spiegelbild 6 verfälscht werden, werden von der Kamera 5 registriert. Da das Lichtraster 4 sehr genau gearbeitet ist, lassen sich die Winkelunterschiede in derOberfläche exakt in Lage und Ausmaß feststellen. Ausgehend von diesen festgestellten Winkelunterschieden läßt sich bei einem planen (Soll) Probanden sowohl die Planität als auch die Welligkeit der Oberfläche 2 berechnen.

Grundsätzlich gelten dieselben Gesetzmäßigkeiten für eine gebogene Oberfläche (oder eine Sphäre, etc.). Allerdings ist die Auswertung dadurch verkompliziert, daß der gesamte Verlauf der Oberfläche erfaßt werden soll, so daß es nicht ausreicht, eine örtliche Betrachtung der Abweichung der Neigung gegenüber einer idealen Oberfläche vorzunehmen. Vielmehr muß ausgehend von wenigstens zwei feststehenden Punkten, auf denen beispielsweise die gebogene Walzglasscheibe abgestützt ist, die Neigung quasi Streifen für Streifen ermittelt werden, so daß sich aus Neigung multipliziert mit der Breite des Streifens ein Stück eines Polygons ergibt. An dieses Stück wird dann das nächste Stück mit seiner spezifischen Neigung "angesetzt", usw. Diese Auswertung liefert eine Vielzahl von Punkten des Verlaufs, den es zu messen gilt. Für eine graphische Darstellung können diese Punkte dann als Kurve dargestellt werden. Für den gesamten ermittelten Verlauf können dann die Koordinaten im Raum ermittelt werden. Die Auswertung kann mittels einer Zeilenkamera in eine Richtung, mittels einer Matrixkamera in zwei zueinander senkrechten Richtungen erfolgen.

Da eine Messung der Winkelunterschiede erfolgt, gehen vorteilhafterweise im Falle der Messung der Planität nicht in die Berechnung des Verlaufs solche (absoluten) Höhenunterschiede (z.B. in Bezug auf eine Nullage der Vorrichtung) ein, die aufgrund einer schrägen Anordnung einer ansonsten planen Oberfläche bei konventionellen Verfahren, die mit scharfen Abbildungen arbeiten, aufgrund des Verlaufens des Bildes ermittelt würden. Ungenauigkeiten in der Positionierung des Glases 2 beeinträchtigen daher vorteithafterweise die Messung grundsätzlich nicht. Da die Messung einschließlich der Auswertung in sehr kurzer Zeit (0,1 bis 2 Sekunden) erfolgt, und eine Betrachtungszeitspanne der Oberfläche 2 von wenigen Millisekunden für die weitere Bearbeitung ausreicht, können problemlos Materialien während ihrer Beförderung. z.B. auf Förderbändern oder dergl., trotz etwaiger Vibrationen ohne Einbuße gemessen werden.

Die von der Kamera 5 beobachteten Hell/Dunkel-Werte werden von einem der Kamera nachgeschalteten (nicht dargestellten) Auswertesystem ausgewertet. Dabei wird als Referenz für die Auswertung von den Abständen des Lichtrasters 4 ausgegangen, das in einer vollständig planen Oberfläche als wirklichkeitsgetreues Spiegelbild reflektiert worden wäre. Das Auswertesystem ermittelt in dem Spiegelbild 6 Abweichungen von dem Lichtraster 4 und errechnet hieraus die jeweiligen örtlichen Winkel, um die die gemessene Oberfläche 2 von einer idealen Oberfläche abweicht. Darüber hinaus ist es möglich, inkrementelle Differenzen benachbarter Streifen als Berechnungsgrundlage für die Welligkeit der Oberfläche heranzuziehen, die oft die optischen Eigenschaften von Glas stark beeinflußt und daher von großem Interesse ist. Außerdem kann die Welligkeit bei Vorsehen einer entsprechend ausgebildeten Einrichtung an einer Walzglaslinie zur Regelung der Walzgtasanlage herangezogen werden. Da das Licht zumindest in erster (hier allein relevanter) Näherung von dem Raster 4 parallel auf die Scheibe 2 fällt, ist es vorteilhafterweise nicht erforderlich, ein Referenzbild aufzunehmen, und für die Auswertung zugrundezulegen, sondern es kann von der bekannten Struktur des Rasters 4 (also von den äquidistanten Abständen des Rasters 4) ausgegangen werden. Der Meßfehler bleibt dadurch gering und die Meßzeit kurz.

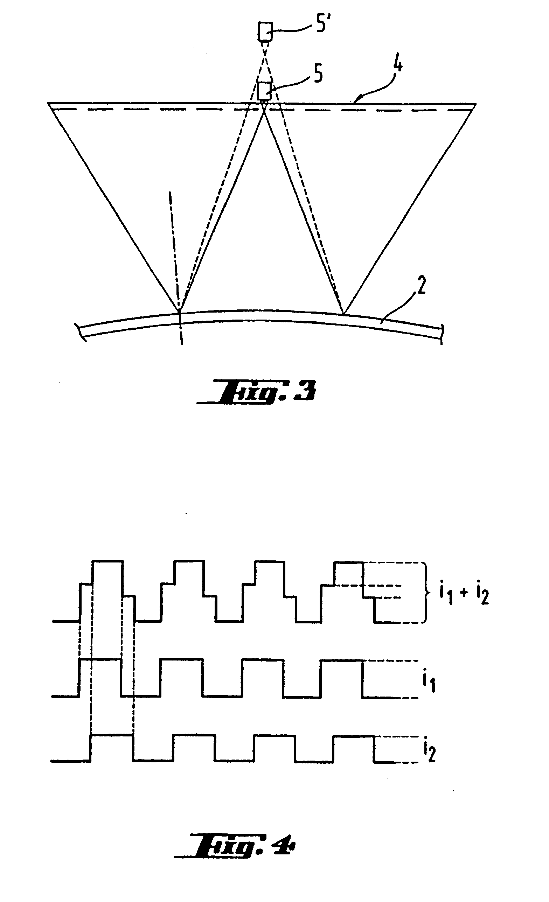

In den Fig. 2 und 3 sind die Komponenten aus Fig. 1 in einer Meßvorrichtung in Vorderansicht und Seitenansicht dargestellt. Es ist zu erkennen, daß die Kamera 5 und das Raster 4 im wesentlichen in derselben Höhe angeordnet sind und einen relativ spitzen Winkel 8 von ca. 20° einschließen. Die Darstellung in Fig. 2 zeigt das Raster 4 parallel, aber leicht seitlich versetzt zur Glasplatte 2, also mit einem unter kleinen Winkel zur Normalen der Oberfläche 2 einfallenden Lichtstrahl (optische Achse), und die Kamera 5 in der Verlängerung des ausfallenden, an der Oberfläche 2 gespiegelten Lichtes (optische Achse). In Fig. 3 ist erkennbar, daß der von der Kamera 5 beobachtete Ausschnitt des Spiegelbilds 6 abhängig ist von der Apertur der Kamera 5. Der von der Kamera beobachtete Ausschnitt ist so gewählt, daß er 80 cm beträgt, so daß 80 Hell/Dunkel-Paare erfaßt werden. Wenn die Anzahl der beobachteten Streifen zu- bzw. abnimmt, wird von der Auswertevorrichtung auf eine entsprechende Krümmung der Oberfläche nach Art einer Linse (Sammel- bzw. Streu-) geschlossen. Auch innerhalb dieser gekrümmten Kontur lassen sich Abweichungen in der Planität schnell und genau messen. Es ist möglich, in wenigen Millisekunden und ohne Einsatz von beweglichen Teilen die Oberflächentopographie des Prüfobjektes 2 zu erfassen, wobei in Meßzeiten von 0,1 bis 2 Sekunden Meßgenauigkeiten zwischen 0,1 bis 3 µm (Welligkeit) und über eine Meßlänge von ca. 800 bis 1600 mm Genauigkeiten von < 0,01 mm bei dem Verlauf oder der Planität erzielbar sind.

In der Praxis ist vorteilhafterweise die Kamera 5 mit der Rastereinheit 4 in einer gemeinsamen Baugruppe ausgebildet. Das Raster 4 ist dann gegenüber einer exakt gegenüberliegenden Lage etwas seitlich parallel versetzt angeordnet, und die Kamera 5 entsprechend in die entgegengesetzte Richtung versetzt, so daß sich vorzugsweise derselbe Winkel für beide optische Achsen ergibt. Hierdurch läßt sich ein besonders günstiger spitzer Winkel von wenigen Grad, beispielsweise 5°, zwischen den optischen Achsen realisieren; die Erfindung ist aber auch bei Öffnungswinkeln von mehr als 5° und weniger als 90° praktisch einsetzbar. Es ist auch möglich, die Kamera in das Raster zu integrieren, und vorzugsweise beide auf einer Normalen zur Oberfläche 2 anzuordnen.

Es versteht sich, daß mit der beschriebenen Vorrichtung der Verlauf in einer Richtung erfaßt wird, nämlich derjenigen, die quer zur Richtung der Streifen, also in Längsrichtung (Biegung) des Walzglases 2, liegt. Im Falle eines im wesentlichen flachen Probanden, beispielsweise eines planen Walzglasabschnitts, auf den ein Dekor aufgedruckt wurde, können die Neigungsänderungen im Vergleich zu einem ideal planen Verlauf als Maßzahl für die Planität verwendet werden. Entsprechend, wie vorstehend für die Längsverlauf bzw. -planität dargelegt, kann auch der Querverlauf bzw. -planität ermittelt werden, indem das Glasstück 2 anschließend derselben Messung unterzogen wird, jedoch unter einer relativen Verdrehung um 90° (entweder die Anlage oder das Glasstück wird um 90° verdreht angeordnet). So kann beispielsweise durch zwei hintereinander angeordnete, um 90° zueinander verdrehte Anordnungen 1 sichergestellt werden, daß auch bei einem kontinuierlichen Verfahren, wie beispielsweise bei der Walzglasherstellung, Angaben über die Längs- und Quer-Planität ermittelt werden. Es ist aber auch möglich, mit einem Kreuzraster (Hell/Dunkel-Paare in zwei, vorzugsweise zueinander senkrechten, Richtungen) ein Bild auf die reflektierende Oberfläche des Glasstücks 2 zu projizieren, welches durch eine Matrixkamera erfaßt wird. Dann können anschließend der Verlauf und Abweichungen von dem Verlauf eines idealen Probanden in Längs- und Querrichtung gleichzeitig ausgewertet werden, wodurch insbesondere Messungen an kontinuierlich oder getaktet geförderten Oberflächen 2 einfach durchführbar sind.

Es ist damit möglich, den Verlauf einer dreidimensionalen Sphäre exakt zu ermitteln, und ebenfalls darin auftretende Steigungsänderungen durch Differentiation zu ermitteln. Ist die Fläche 2 plan, läßt sich so sehr genau die Planität ermitteln; ist die Fläche 2 gebogen (oder weist sie eine definierte Sphäre auf), läßt sich so sehr genau die Biegegüte bzw. -glätte ermitteln.

Wie in Fig. 2 mit gestrichelten Linien dargestellt, liegt eine Besonderheit der Glasplatte 2 darin, daß sie doppelt reflektierend ist, das heißt, daß das Raster 4 einmal an der Oberseite und einmal an der Unterseite der Glasplatte 2 reflektiert wird. Da nur der an der Oberseite nicht reflektierte Lichtstrahl (teilweise) an der Unterseite der Glasplatte reflektiert wird, ist die Intensität der ersten Reflexion etwas stärker als die Intensität der zweiten Reflexion. Soweit das so entstehende Spiegelbild 6 unter einem Winkel beobachtet wird, überlagern diese beiden Reflexionen einander. Der Winkel bei der Beobachtung des Spiegelbilds 6 ist im wesentlichen durch die kompakte Größe der Kamera 5 und deren Aperturöffnung bedingt, und ändert sich je nach Pixel; dieser Winkelversatz wird bei der Auswertung berücksichtigt (die Weglängenänderung in Abhängigkeit von dem Winkel wird durch das Strahlenverhältnis der Abbildung im wesentlichen aufgehoben). Es ist möglich, durch etwas Unscharfstellen der Kamera 5 die Resultierende der Überlagerung der beiden Spiegelbilder im Glas 2 zu erfassen. Die Resultierende der von der Oberseite des Glases 2 reflektierten Lichtintensität i1 und des von der Unterseite des Glases reflektierten Lichtintensität i2 ist in Fig. 4 dargestellt. Da i1 > i2 kann das resultierende Signal leicht getrennt werden, so daß die Ober- und die Unterseite bezüglich ihres Verlaufs (und weiteren, abgeleiteten Werten wie der Planität, Welligkeit, Biegegenauigkeit, Höhe, Dicke, etc.) separat auswertbar sind.

Alternativ ist es möglich, eine zweite Kamera 5' hinter der Kamera 5 anzuordnen, wobei jede der beiden Kameras auf eines der Spiegelbilder (also auf das Raster) scharf gestellt ist und die erfaßten Daten entsprechend ausgewertet werden. Ebenso ist es möglich, weitere Zeilenkameras 5" parallel zur Kamera 5 zu betreiben und dadurch vorteilhaft im Parallelbetrieb in einer engen Zone viele Meßwerte zu erfassen, und diese anschließend weiterzuverarbeiten. Auch ein Abtasten (Scannen) mit einer Zeilenkamera über einen Flächenbereich ist möglich.

Die Anordnung einer zweiten Kamera 5' in einer anderen Höhe als die Kamera 5, die vorzugsweise denselben Bildausschnitt beobachtet, hat noch einen weiteren Vorteil. Eine Änderung der Anzahl der beobachteten Streifen kann, wie oben bereits dargelegt, auf eine Linsenform der Oberfläche zurückzuführen sein. Dasselbe Phänomen tritt jedoch auf, wenn - aus welchen Gründen auch immer - die Höhe der beobachteten Oberfläche 2 verändert wird und der beobachtete Bildausschnitt entsprechend mehr oder weniger Streifen enthält. Aufgrund der verschiedenen Höhen der Kameras 5, 5' kann ein Höhenfehler auf einfache Weise korrigiert werden, und dementsprechend bei der Auswertung des Verlaufs berücksichtigt werden.

Eine andere Alternative bei der Auswertung von doppelt reflektierenden Materialien kann, insbesondere bei getöntem, z.B. grünem, Glas zum Einsatz gelangen. Wird grünes Glas (z.B. abwechselnd) mit rotem und mit grünem Licht aus dem Raster angestrahlt, wird dieses in stark unterschiedlichem Maß von dem Glas absorbiert, so daß die Intensität des von der Unterseite reflektierten Lichts sich signifikant unterscheidet. Aus den unterschiedlichen Intensitäten für verschiedene Lichtwellenlängen lassen sich auf einfache Weise Rückschlüsse über die Lage der Reflexion an der Ober- bzw. Unterseite des Glases ziehen. Alternativ ist es möglich, zur Beobachtung des Spiegelbilds 6 eine Farbkamera einzusetzen, wodurch die Sprünge in den erfaßten Intensitäten für Rot, Blau und Grün leicht separiert werden und auf die entsprechende Seite des Glases zurückgeführt werden können.

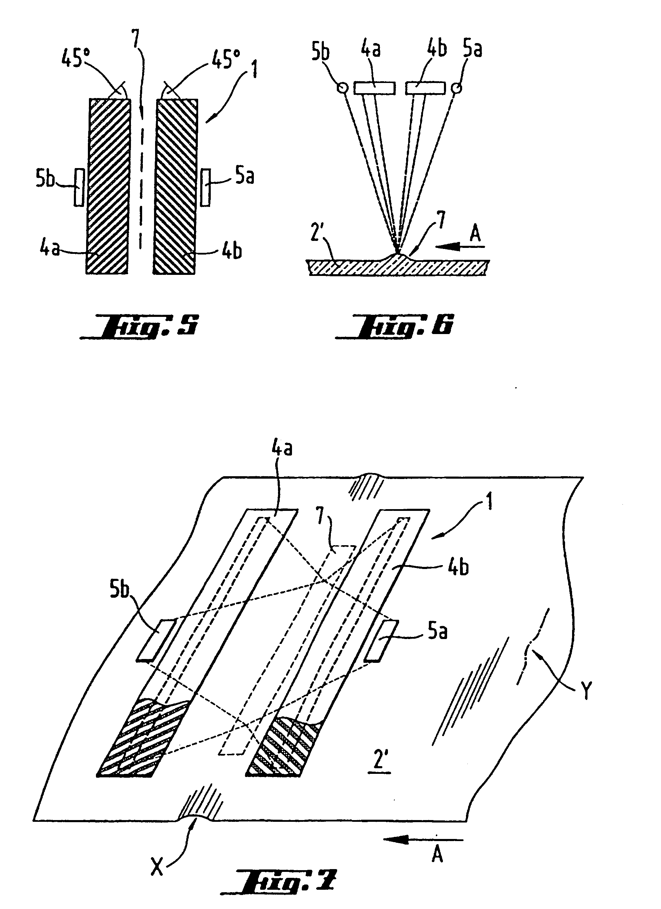

Bezugnehmend auf die Fig. 5 bis 7 wird ein weiteres Ausführungsbeispiel einer erfindungsgemäßen Vorrichtung näher erläutert. Dieselben Bezugszeichen bezeichnen grundsätzlich dieselben Teile wie in den vorhergehenden Ausführungsbeispielen, woraus sich auch ergibt, daß einander substituierende Teile auch gegenseitig austauschbar sind.

Aus der Draufsicht in Fig. 5 ist zu erkennen, daß die Vorrichtung zwei langgestreckte Raster 4a, 4b aufweist, die unmittelbar nebeneinander angeordnet sind. Die beiden Raster 4a, 4b weisen beide Streifen auf, die schräg (und nicht senkrecht wie bei dem vorherigen Ausführungsbeispiel) zu ihrer Längserstreckung verlaufen, im vorliegenden Ausführungsbeispiel unter einem Winkel von 45°. Die Schrägen der beiden Raster 4a, 4b sind um 90° zueinander versetzt.

Etwa in der Mitte der beiden einander abgekehrten Längsseiten der Raster 4a, 4b sind in etwa gleicher Höhe zwei Kameras 5a, 5b angeordnet, die denselben Bildausschnitt 7 beobachten. Der beobachtete Gegenstand ist ein Endlosband z.B. aus Flachglas oder einer teils reflektierenden, teils transparenten Folie aus Kunststoff. Die Kameras sind ein wenig in Richtung des Bildausschnitts 7 geneigt. Jede der beiden Kameras 5a, 5b beobachtet im vorliegenden Ausführungsbeispiel die Reflexion des von ihr weiter weg angeordneten Rasters. Alternativ wäre es auch möglich, die Kameras in der Mitte zwischen den Rastern anzuordnen.

Der Pfeil A in Fig. 7 deutet eine Bewegungsrichtung (Strom) des Endlosbandes an. Mit X ist in Fig. 7 ein erster Fehlertyp schematisch illustriert, der typischerweise in Richtung des Pfeils A wirksam ist, d.h. daß zunächst beim Passieren des Bildausschnitts 7 ein etwas weiter stromabwärts (in der Fig. links) angeordneter Bereich der Raster von den Kameras 5a, 5b aufgenommen wird. Die beobachtete Reflexion wandert dann wieder zurück und weiter in die andere Richtung (entgegen Pfeil A), bevor wieder der ursprüngliche Bereich der Raster zu sehen ist. Diese Art des Auswanderns würde bei dem Raster wie in Fig. 2 und 3 nicht festgestellt werden können, da die Kameras stets dasselbe Bild beobachtet hätten. In der vorliegenden Vorrichtung jedoch erfaßt die Kamera 5a (links) zunächst eine Verschiebung des (ungestauchten / ungedehnten) Rasterbildes zu der einen Seite (z.B: in Richtung des Pfeils A gesehen nach rechts), dann in die umgekehrte Richtung über den Normalzustand hinaus bis zu einer weiteren Wendemarke, und dann nochmal eine Wende bis zurück zu dem Ausgangsbild. Genau Richtungsverkehrt ist die von der Kamera 5b (in Fig. 5 rechts) beobachtete Wanderung. Somit kann mittels zweier Zeilenkameras und zweier Raster ein Fehler auch in der Ebene quer zur Erstreckungsrichtung des Rasters bestimmt werden. Die beiden Raster 4a, 4b sind zu diesem Zweck mit Streifen versehen, die sowohl zur Förderrichtung A der Folie als auch zur Spiegelachse zwischen der Zeilenerstreckung der Kamera und der Längserstrekung des Rasters schräg angeordnet sind.

Ein Fehler der Art, der in Fig. 7 mit Y angedeutet ist, wird von beiden Kameras zuverlässig durch die Stauchung bzw. Dehnung des beobachteten Bildes, ermittelt, durch einen phasenauswertendes Verfahren wie beschrieben, detektiert.

Es versteht sich, daß demnach auch Flächenverläufe bzw. Planitätsverläufe, bei denen sich Fehler der Art X und Y überlagern, so wie es in der Realität der Fall ist, zuverlässig und kostengünstig mit zwei Zeilenkameras ermittelbar sind.

## Patentansprüche

1. Verfahren zum Messen des Verlaufs einer reflektierenden Oberfläche eines Gegenstands (2), umfassend die Schritte
Richten eines definierten Musters aus wenigstens zwei verschiedenen Lichtintensitäten auf die zu messende Fläche, wobei das Muster in der reflektierenden Oberfläche ein Spiegelbild (6) erzeugt;
Beobachten wenigstens eines Ausschnitts der Fläche mittels mindestens einer Kamera (5), wobei der beobachtete Ausschnitt einen Ausschnitt des Spiegelbilds (6) des Musters umfaßt; und
Auswerten des beobachteten Ausschnitts ausgehend von den Kameradaten,
**dadurch gekennzeichnet,**
**daß** der Auswerteschritt eine Integration der Winkelverläufe zwischen zwei Meßpunkten umfaßt, woraus die geometrische Lage jedes Punktes zwischen den zwei Meßpunkten ermittelbar ist, wobei der Verlauf der Oberfläche ausgehend von einem bekannten Punkt durch Aneinandersetzen errechneter Abschnitte ermittelt wird.

2. Verfahren nach Anspruch 1, **dadurch gekennzeichnet, daß** die Kamera unmittelbar auf das Spiegelbild (6) des Musters in der Oberfläche scharf eingestellt ist.

3. Verfahren nach Anspruch 1, **dadurch gekennzeichnet, daß** die Kamera (5) das Spiegelbild (6) über einen Spiegel beobachtet.

4. Verfahren nach einem der Ansprüche 1 bis 3, **dadurch gekennzeichnet, daß** die Kamera (5) eine Zeilen- oder Matrixkamera ist.

5. Verfahren nach einem der Ansprüche 1 bis 4, **dadurch gekennzeichnet, daß** das Muster aus parallelen alternierend hellen und dunklen Streifen besteht.

6. Verfahren nach einem der Ansprüche 1 bis 4, **dadurch gekennzeichnet, daß** das Muster schachbrettartig helle und dunkle Quadrate anordnet.

7. Verfahren nach einem der Ansprüche 1 bis 4, **dadurch gekennzeichnet, daß** das Muster aus einander kreuzenden Linien einer ersten Helligkeit und von den Linien eingeschlossenen Rechtecken, vorzugsweise Quadraten, einer zweiten Helligkeit besteht.

8. Verfahren nach einem der Ansprüche 1 bis 7, **dadurch gekennzeichnet, daß** das Muster zeitlich intermittierend erzeugt wird.

9. Verfahren nach einem der Ansprüche 1 bis 8, **dadurch gekennzeichnet, daß** die Oberfläche relativ zu Lichtquelle (3) und Kamera (5) bewegt wird.

10. Verfahren nach Anspruch 9, **dadurch gekennzeichnet, daß** der Schritt des Beobachtens des Spiegelbildes (6) gegenüber der Bewegungsgeschwindigkeit der Oberfläche schnell erfolgt.

11. Verfahren nach einem der Ansprüche 1 bis 9, **dadurch gekennzeichnet, daß** in dem Auswerteschritt eine dreidimensionale Darstellung infolge eines einmaligen Beobachtungsschrittes erfolgt.

12. Verfahren nach einem der Ansprüche 1 bis 11, **dadurch gekennzeichnet, daß** die zu messende Oberfläche im wesentlichen plan ist und der Auswerteschritt eine Berechnung der örtlichen Abweichung von der Planität umfaßt.

13. Verfahren nach einem der Ansprüche 1 bis 12, **dadurch gekennzeichnet, daß** der Auswerteschritt die Schritte umfaßt
Berechnung der Ablenkung des Spiegelbilds (6) gegenüber einer idealen Oberfläche;
Ermittlung der Neigung der gemessenen Oberfläche ausgehend von der Ablenkung.

14. Verfahren nach Anspruch 13, **dadurch gekennzeichnet, daß** der Auswerteschritt die Schritte umfaßt
Integration der Neigungswerte zur Bestimmung des Verlaufs der Oberfläche über den beobachteten Ausschnitt.

15. Verfahren nach Anspruch 14, **dadurch gekennzeichnet, daß** der Auswerteschritt die Schritte umfaßt
Differentiation der Neigungswerte zur Bestimmung des Welligkeit der Oberfläche über den beobachteten Ausschnitt.

16. Verfahren nach einem der Ansprüche 1 bis 15, **dadurch gekennzeichnet, daß** mindestens eine weitere Kamera denselben Bildausschnitt als die mindestens eine Kamera (5) beobachtet.

17. Verfahren nach einem der Ansprüche 1 bis 16, **dadurch gekennzeichnet, daß** zwei Muster vorgesehen sind, die schräg zur Spiegelachse verlaufen, deren Spiegelbild von je einer Zeilenkamera (5a, 5b) in demselben Oberflächenausschnitt (7) beobachtet wird, und daß zur Auswertung der beobachteten Ausschnitte (7) der seitliche Versatz der von den beiden Kameras (5a, 5b) beobachteten Muster als Aussage für eine Neigungsänderung der gemessenen Oberfläche quer zur Spiegelachse dient.

18. Verfahren nach einem der Ansprüche 1 bis 17, **dadurch gekennzeichnet, daß** der beobachtete Gegenstand (2) aus einem zumindest für Licht bestimmter Wellenlängen teilweise transparenten Material besteht, das dieses Licht an wenigstens einer weiteren hinter der Öberfläche angeordneten Fläche reflektiert

19. Vorrichtung zum Bestimmen des Verlaufs der reflektierenden Oberfläche eines Gegenstands (2), umfassend
Mittel (3, 4) zum Erzeugen eines Lichtmusters;
mindestens eine Kamera (5) zur Beobachtung wenigstens eines Abschnitts der Oberfläche, und
Mittel zum Auswerten des beobachteten Abschnitts ausgehend von den Kameradaten,
**dadurch gekennzeichnet,**
**daß** die Kamera (5) auf ein Spiegelbild (6) des Lichtmusters in der Oberfläche scharf eingestellt ist,
**daß** die Mittel zum Auswerten im Betrieb eine Integration der Winkelverläufe zwischen zwei Meßpunkten umfassen, und
**daß** die Mittel zum Auswerten im Betrieb ein Berechnen der geometrischen Lage jedes Punktes zwischen zwei gemessenen Punkten, ausgehend von einem bekannten Punkt, an den eine entsprechende Anzahl von berechneten Abschnitten angesetzt werden, umfassen.

20. Vorrichtung nach Anspruch 19, **dadurch gekennzeichnet, daß** die Mittel zum Erzeugen eines Lichtmusters eine Lichtquelle (3) und ein zwischen Lichtquelle und Oberfläche angeordnetes Raster (4) umfassen.

21. Vorrichtung nach Anspruch 20, **dadurch gekennzeichnet, daß** die Mittel zum Erzeugen eines Lichtmusters eine Leuchtwand aus einer Matrix von einzeln ansteuerbaren Beleuchtungsquellen, vorzugsweise LEDs, umfaßt.

22. Vorrichtung nach einem der Ansprüche 19 bis 21, **dadurch gekennzeichnet, daß** die optische Achse zwischen Lichtmuster und Spiegelbild (6) einerseits und zwischen Spiegelbild (6) und Kamera (5) andererseits gemeinsam einen Winkel (8) von kleiner 90° einschließen.

23. Vorrichtung nach einem der Ansprüche 19 bis 22, **dadurch gekennzeichnet, daß** das Lichtmuster eine scharf abgegrenzte Struktur von wenigstens zwei regelmäßig alternierend angeordneten unterschiedlichen Lichtintensitäten aufweist.

24. Vorrichtung nach einem der Ansprüche 19 bis 23, **dadurch gekennzeichnet, daß** die Kamera (5) eine Matrix- oder Zeilenkamera ist, und daß eine Zeile der Kamera (5) und die Mittel zur Erzeugung des Lichtmusters sich parallel erstrecken.

25. Vorrichtung nach einem der Ansprüche 19 bis 24, **dadurch gekennzeichnet, daß** die Mittel zur Erzeugung des Lichtmusters (3, 4) und Kamera (5) in einem Gehäuse in geringem Abstand voneinander oder ineinander integriert oberhalb der Oberfläche (2) angeordnet sind.

26. Vorrichtung nach einem der Ansprüche 19 bis 25, **dadurch gekennzeichnet, daß** wenigstens ein definierter Auflagepunkt für den zu vermessenden Gegenstand vorgesehen ist.

27. Vorrichtung nach einem der Ansprüche 19 bis 26, **dadurch gekennzeichnet, daß** die Oberfläche (2) aus Glas besteht.

28. Vorrichtung nach Anspruch 27, **dadurch gekennzeichnet, daß** das Glas als Endlosband ausgebildet ist, und daß Mittel vorgesehen sind, um das Glas durch die Vorrichtung hiridurchzufördem.

29. Vorrichtung nach einem der Ansprüche 19 bis 28, **dadurch gekennzeichnet, daß** ein Parabolspiegel derart angeordnet ist, daß das Spiegelbild (6) über den Parabolspiegel auf die Kamera fällt.

30. Vorrichtung nach einem der Ansprüche 19 bis 29, **dadurch gekennzeichnet, daß** zwei Kameras angeordnet sind, die im wesentlichen auf denselben Ausschnitt des Spiegelbilds (6) gerichtet sind.

31. Vorrichtung nach einem der Ansprüche 19 bis 30, **dadurch gekennzeichnet, daß** die Kamera schwenkbar oder verlagerbar ist zum Abtasten auch der zu dem Ausschnitt benachbarten Ausschnitte.

32. Vorrichtung nach einem der Ansprüche 19 bis 31, **dadurch gekennzeichnet, daß** die Mittel zum Erzeugen eines Lichtmusters (4), die Kamera (5) und die Oberfläche (2) in im wesentlichen parallelen Ebenen angeordnet sind.

33. Vorrichtung nach einem der Ansprüche 19 bis 32, **dadurch gekennzeichnet, daß** zwei Mittel zum Erzeugen eines Lichtmuster vorgesehen sind, wobei die Muster zueinander und zur Spiegelachse mit je einer zugehörigen Kamera einen Winkel aufweisen, und daß die beiden Kameras das Spiegelbild je eines Musters an demselben Reflexionsort der Oberfläche beobachten.

## Claims

1. A method for measuring the profile of a reflective surface of an object (2), comprising the steps
aiming a defined pattern composed of at least two different light intensities onto the surface to be measured, wherein the pattern produces a mirror image (6) in the reflective surface;
observing of at least one section of the surface by means of at least one camera (5), wherein the observed section comprises a section of the mirror image (6) of the pattern; and
evaluating of the observed section based on the camera data,
**characterized in**
**that** the evaluation step comprises an integration of the angle profiles between two measurement points, from which it is possible to determine the geometric position of each point between the two measurement points wherein the profile of the surface is determined by appending calculated sections starting from a known point.

2. The method as claimed in claim 1, **characterized in that** the camera is set such that it is focused directly on the mirror image (6) of the pattern in the surface.

3. The method as claimed in claim 1, **characterized in that** the camera (5) observes the mirror image (6) via a mirror.

4. The method as claimed in one of claims 1 to 3, **characterized in that** the camera (5) is a line-scan camera or matrix camera.

5. The method as claimed in one of claims 1 to 4, **characterized in that** the pattern is composed of parallel, alternately light and dark strips.

6. The method as claimed in one of claims 1 to 4, **characterized in that** the pattern arranges light and dark squares like a checkerboard.

7. The method as claimed in one of claims 1 to 4, **characterized in that** the pattern is composed of mutually crossing lines of first brightness and of rectangles, preferably squares, enclosed by the lines and of a second brightness.

8. The method as claimed in one of claims 1 to 7, **characterized in that** the pattern is produced intermittently in time.

9. The method as claimed in one of claims 1 to 8, **characterized in that** the surface is moved relative to the light source (3) and camera (5).

10. The method as claimed in claim 9, **characterized in that** the step of observation of the mirror image (6) is fast in comparison with the rate of movement of the surface.

11. The method as claimed in one of claims 1 to 9, **characterized in that** a three-dimensional representation resulting from a single observation step is produced in the evaluation step.

12. The method as claimed in one of claims 1 to 11, **characterized in that** the surface to be measured is essentially planar, and the evaluation step comprises calculation of the local discrepancy from planarity.

13. The method as claimed in one of claims 1 to 12, **characterized in that** the evaluation step comprises the following steps
calculation of the deflection of the mirror image (6) with respect to an ideal surface;
determination of the inclination of the measured surface, based on the deflection.

14. The method as claimed in claim 13, **characterized in that** the evaluation step comprises the following steps
integration of the inclination values in order to determine the profile of the surface over the observed section.

15. The method as claimed in claim 14, **characterized in that** the evaluation step comprises the following steps
differentiation of the inclination values in order to determine the ripple of the surface over the observed section.

16. The method as claimed in one of claims 1 to 15, **characterized in that** at least one further camera observes the same image section as the at least one camera (5).

17. The method as claimed in one of claims 1 to 16, **characterized in that** two patterns are provided which run obliquely with respect to the mirror axis and whose mirror image is observed by in each case one line-scan camera (5a, 5b) in the same surface section (7) and that the lateral offset of the pattern observed by the two cameras (5a, 5b) is used for evaluating the observed sections (7), as a statement of the inclination change of the measured surface transversely with respect to the mirror axis.

18. The method as claimed in one of claims 1 to 17, **characterized in that** the observed object (2) is composed of a material which is at least partially transparent for light at specific wavelengths and which reflects this light on at least one further surface, arranged behind the surface.

19. An apparatus for determining the profile of the reflective surface of an object, comprising
means (3,4) for producing a light pattern;
at least one camera (5) for observing at least one section of the surface, and
means for evaluating of the observed section based on the camera data,
**characterized in**
**that** the camera (5) is set focused on a mirror image (6) of the light pattern in the surface,
**that** the means for evaluating comprise in use integrating of the angle profiles between two measurement points, and
**that** the means for evaluating comprise in use calculating the geometric position of each point between the two measurement points, starting from a known point to which a corresponding number of evaluated sections are appended.

20. The apparatus as claimed in claim 19, **characterized in that** the means for producing a light pattern comprise a light source (3) and a grid (4) arranged between the light source and the surface.

21. The apparatus as claimed in claim 20, **characterized in that** the means for producing a light pattern comprise a light wall composed of a matrix of illumination sources, preferably LEDs, which can be driven individually.

22. The apparatus as claimed in one of claims 19 to 21, **characterized in that** the optical axis between the light pattern and the mirror image (6) on the one hand, and between the mirror image (6) and the camera (5) on the other hand, together include an angle (8) of less than 90°.

23. The apparatus as claimed in one of claims 19 to 22, **characterized in that** the light pattern has a sharply bounded structure of at least two different light intensities which are arranged regularly and alternating.

24. The apparatus as claimed in one of claims 19 to 23, **characterized in that** the camera (5) is a matrix camera or a line-scan camera, and that a line of the camera (5) and the means for producing the light pattern extend parallel to one another.

25. The apparatus as claimed in one of claims 19 to 24, **characterized in that** the means for producing the light pattern (3, 4) and the camera (5) are arranged in a housing at a short distance from one another or integrated in one another above the surface (2).

26. The apparatus as claimed in one of claims 19 to 25, **characterized in that** at least one defined mounting point is provided for the object to be measured.

27. The apparatus as claimed in one of claims 19 to 26, **characterized in that** the surface (2) is composed of glass.

28. The apparatus as claimed in claim 27, **characterized in that** the glass is in the form of an endless strip, and that means are provided in order to feed the glass through the apparatus.

29. The apparatus as claimed in one of claims 19 to 28, **characterized in that** a parabolic mirror is arranged in such a manner that the mirror image (6) falls on the camera via the parabolic mirror.

30. The apparatus as claimed in one of claims 19 to 29, **characterized in that** two cameras are arranged, and are pointed essentially at the same section of the mirror image (6).

31. The apparatus as claimed in one of claims 19 to 30, **characterized in that** the camera can be pivoted or can be moved in order that sections which are adjacent to the section can also be scanned.

32. The apparatus as claimed in one of claims 19 to 31, **characterized in that** the means for producing a light (4), the camera (5) and the surface (2) are arranged on essentially parallel planes.

33. The apparatus as claimed in one of claims 19 to 32, **characterized in that** two means for producing a light pattern are provided, which are at an angle with respect to one another and with respect to the mirror axis with in each case one associated camera, and that the two cameras observe the mirror image of in each case one pattern at the same reflection point on the surface.

## Revendications

1. Procédé de mesure de l'allure d'une surface réfléchissante d'un objet (2), comportant les étapes consistants à
diriger un motif défini se composant d'au moins deux intensités lumineuses différentes sur la surface à mesurer, le motif générant dans la surface réfléchissante une image réfléchie (6);
observer au moins une section de la surface au moyen d'une caméra (5), la section observée comportant une section de l'image réfléchie (6) du motif; et
exploiter la section observée à partir de données fournies par la caméra,
**caractérisé en ce que** l'étape d'exploitation comporte une intégration des allures angulaires entre deux points de mesure à partir desquels la position géométrique de chaque point entre deux points de mesure peut être déterminée, l'allure de la surface étant déterminée à partir d'un point connu en plaçant côte à côte des sections calculées.

2. Procédé selon la revendication 1, **caractérisé en ce que** la caméra est réglée avec précision directement sur l'image réfléchie (6) du motif dans la surface.

3. Procédé selon la revendication 1, **caractérisé en ce que** la caméra (5) observe l'image réfléchie (6) via un miroir.

4. Procédé selon l'une des revendications 1 à 3, **caractérisé en ce que** la caméra est une caméra à lignes ou une caméra matricielle.

5. Procédé selon l'une des revendications 1 à 4, **caractérisé en ce que** le motif se compose de bandes claires et sombres parallèles en alternance.

6. Procédé selon l'une des revendications 1 à 4, **caractérisé en ce que** le motif se compose de carrés clairs et sombres en damier.

7. Procédé selon l'une des revendications 1 à 4, **caractérisé en ce que** le motif se compose de lignes qui s'entrecroisent d'une première luminosité et de rectangles fermés, de préférence de carrés, fermés par des lignes d'une deuxième luminosité.

8. Procédé selon l'une des revendications 1 à 7, **caractérisé en ce que** le motif est généré temporellement par intermittence.

9. Procédé selon l'une des revendications 1 à 8, **caractérisé en ce que** la surface est déplacée par rapport à la source lumineuse (3) et la caméra (5).

10. Procédé selon la revendication 9, **caractérisé en ce que** l'étape d'observation de l'image réfléchie (6) est effectué rapidement par rapport à la vitesse de déplacement de la surface.

11. Procédé selon l'une des revendications 1 à 9, **caractérisé en ce qu'**une représentation tridimensionnelle est effectuée dans l'étape d'exploitation à la suite d'une seule étape d'observation.

12. Procédé selon l'une des revendications 1 à 11, **caractérisé en ce que** la surface à mesurer est sensiblement plane et l'étape d'exploitation comporte un calcul de la déviation locale par rapport à la planéité.

13. Procédé selon l'une des revendications 1 à 12, **caractérisé en ce que** l'étape d'exploitation comporte les étapes consistant à
calculer la déviation de l'image réfléchie (6) par rapport à une surface idéale ;
déterminer l'inclinaison de la surface mesurée à partir de la déviation.

14. Procédé selon la revendication 13, **caractérisé en ce que** l'étape d'exploitation comporte les étapes consistant à
intégrer les valeurs destinées pour déterminer l'allure de la surface sur la section observée.

15. Procédé selon la revendication 14, **caractérisé en ce que** l'étape d'exploitation comporte les étapes consistant à
différencier les valeurs d'inclinaison pour déterminer l'ondulation de la surface sur la section observée.

16. Procédé selon l'une des revendications 1 à 15, **caractérisé en ce que** au moins une autre caméra observe la même section d'image que l'au moins une caméra (5).

17. Procédé selon l'une des revendications 1 à 16, **caractérisé en ce qu'**il est prévu deux motifs qui sont inclinés par rapport à l'axe de miroir dont l'image réfléchie est observé dans la même section de surface (7) par chacune des caméras à lignes (5a, 5b) et **en ce que**, pour exploiter les sections observées (7), le décalage latéral des motifs observés par les deux caméras (5a, 5b) sert d'information pour modifier l'inclinaison de la surface mesurée transversalement à l'axe de miroir.

18. Procédé selon l'une des revendications 1 à 17, **caractérisé en ce que** l'objet observé (2) se compose d'un matériau partiellement transparent au moins pour une lumière de longueurs d'onde déterminées qui rétléchit cette lumière sur au moins une autre face disposée en arrière de la surface.

19. Dispositif pour déterminer l'allure de la surface réfléchissante d'un- objet (2), comportant
des moyens (3, 4) pour générer un motif lumineux,
au moins une caméra (5) pour observer au moins une section de la surface, et
des moyens pour exploiter la section observée à partir des données fournies par la caméra,
**caractérisé en ce que**
la caméra (5) est réglée avec précision sur une image réfléchie (6) du motif lumineux dans la surface,
les moyens d'exploitation comportent en fonctionnement une intégration des allures angulaires entre deux points de mesure, et
les moyens d'exploitation comportent en fonctionnement un calcul de la position géométrique de chaque point entre deux points de mesure, à partir d'un point connu, auquel se rapporte un nombre correspondant de sections calculées.

20. Dispositif selon la revendication 19, **caractérisé en ce que** les moyens de génération d'un motif lumineux comporte une source lumineuse (3) et une trame (4) disposée entre la source lumineuse et la surface.

21. Dispositif selon la revendication 20, **caractérisé en ce que** les moyens de génération d'un motif lumineux comporte une paroi lumineuse constituée d'une matrice de sources d'éclairement commandées individuellement, de préférence des LED.

22. Dispositif selon l'une des revendications 19 à 21, **caractérisé en ce que** l'axe optique entre le motif lumineux et l'image réfléchie (6) d'une part et entre l'image réfléchie (6) et la caméra (5) d'autre part forme en commun un angle (8) inférieur 90°.

23. Dispositif selon l'une des revendications 19 à 22, **caractérisé en ce que** le motif lumineux comporte une structure, précisément délimitée, d'au moins deux intensités lumineuses différentes alternant régulièrement.

24. Dispositif selon l'une des revendications 19 à 23, **caractérisé en ce que** la caméra (5) est une caméra à lignes ou une caméra matricielle et **en ce qu'**une ligne de la caméra (5) et les moyens de génération du motif lumineux s'étendent parallèlement.

25. Dispositif selon l'une des revendications 19 à 24, **caractérisé en ce que** les moyens de génération du motif lumineux (3, 4) et la caméra (5) sont disposés dans un boîtier à faible distance l'un de l'autre ou en étant intégrés l'une dans l'autre au-dessus de la surface (2).

26. Dispositif selon l'une des revendications 19 à 25, **caractérisé en ce qu'**il est prévu au moins un point d'appui défini pour l'objet à mesurer.

27. Dispositif selon l'une des revendications 19 à 26, **caractérisé en ce que** la surface (2) est en verre.

28. Dispositif selon la revendication 27, **caractérisé en ce que** le verre est conformée en bande sans fin et **en ce qu'**il est prévu des moyens pour faire passer le verre à travers le dispositif.

29. Dispositif selon l'une des revendications 19 à 28, **caractérisé en ce qu'**un miroir parabolique est disposé de telle façon que l'image réfléchie (6) est incidente à la caméra via le miroir parabolique.

30. Dispositif selon l'une des revendications 19 à 29, **caractérisé en ce qu'**il est prévu deux caméras qui sont dirigées sensiblement sur la même section de l'image réfléchie (6).

31. Dispositif selon l'une des revendications 19 à 30, **caractérisé en ce que** la caméra est pivotante ou déplaçable en vue d'explorer également les sections adjacentes à la section.

32. Dispositif selon l'une des revendications 19 à 31, **caractérisé en ce que** les moyens de génération d'un motif lumineux (4), la caméra (5) et la surface (2) sont disposés dans des plans sensiblement parallèles.

33. Dispositif selon l'une des revendications 19 à 32, **caractérisé en ce qu'**il est prévu deux moyens de génération d'un motif lumineux, les motifs faisant un angle entre eux et par rapport à l'axe de miroir auquel est associé à chaque fois une caméra, et **en ce que** les deux caméras observent l'image réfléchie d'un motif au même endroit de réflexion de la surface.
